# EUROPÄISCHE PATENTSCHRIFT

(11) **EP 1 669 682 B1**
(45) Veröffentlichungstag und Bekanntmachung des Hinweises auf die Patenterteilung: **16.07.2014**
(21) Anmeldenummer: 04405755.2
(22) Anmeldetag: 07.12.2004
(51) Int. Cl.: F24D 3/16

(54) **Faserzusammensetzung, Verwendung derselben, Verfahren zur Herstellung der Faserzusammensetzung, Wärmetauscherelement, Wärmetauschersystem und Verwendung desselben**
Fiber composition, use and method for making the same, heat exchange element, heat exchange system and the use of the same.
Composition de fibres et utilisation et procédé pour la fabrication de cette composition, élément d'échange de chaleur et système d'échange de chaleur et utilisation de cet système

(43) Veröffentlichungstag der Anmeldung: 14.06.2006
(73) Patentinhaber: Götz, Thomas, 8266 Steckborn (CH); Kleiner, Wolfgang, 8266 Steckborn (CH)
(72) Erfinder: Götz, Thomas, 8266 Steckborn (CH); Kleiner, Wolfgang, 8266 Steckborn (CH)
(74) Vertreter: Hepp Wenger Ryffel AG

(56) Entgegenhaltungen:
- EP-A- 0 990 856
- DE-A1- 3 004 562
- DE-A1- 19 539 309
- GB-A- 2 012 831
- US-B1- 6 805 298

## Beschreibung

Die Erfindung betrifft eine Faserzusammensetzung, eine Verwendung der Faserzusammensetzung, ein Wärmetauscherelement mit mindestens einer integrierten Heiz- und/oder Kühlleitung, ein Verfahren zur Herstellung des Wärmetauscherelements, ein Wärmetauschsystem aus Wärmetauscherelementen und eine Verwendung desselben mit den.Merkmalen des Oberbegriffs der unabhängigen Patentansprüche.

Aus dem Stand der Technik sind vielfältige wärmeleitfähige Materialien, deren Verwendung in Wärmetauscherelementen, sowie Heiz- und Kühlelemente und Anordnungen derselben bekannt.

Exemplarisch seien die folgenden Druckschriften aufgeführt.

Druckschrift DE 19844617 A1 (entsprechend EP 099 0856) zeigt eine Anordnung zur Klimatisierung von Räumen, bestehend aus Klimaplatten mit einem Korpus aus mineralischen Material und einem mäanderförmig gebogenen Rohrregister.

In der Druckschrift DE 20 2004 002 089 U1 ist ein Heizelement in Sandwichbauweise vorgestellt, wobei Heizrohre in einer wärmeleitenden, mit verschiedenen Materialien gefüllten Kunststoffkompositschicht eingebettet sind und die Wärmeleitung über eingelagerte Partikel, z.B. Aluminiumpulver, erfolgt.

Die Europäische Anmeldung EP 0955 504 A1 zeigt vorgefertigte und zusammen fügbare Heizelemente, in denen ein Rohrverlauf in einem geeigneten Material, beispielsweise Beton vergossen ist.

Die Zusammensetzungen und Vorrichtungen aus dem Stand der Technik sind entweder für den nachträglichen Einbau eines Heizsystems wenig geeignet, wenn das verwendete Material, z.B. Beton sehr schwer ist und damit die Transportabilität einschränkt, oder die Herstellung ist aufwändig, sowohl im Hinblick auf den Herstellungsprozess als auch auf die Herstellungskosten.

Ausserdem ist aus der Druckschrift DE 195 39 309 C2 eine Faserzusammensetzung aus einem Sekundärrohstoff und mindestens einem Mischungspartner bekannt, die zur Verwendung als Schallschutz- und Schalldämmstoff geeignet ist. Bei dem Sekundärrohstoff kann es sich um Cellulose, bei dem Mischungspartner um Blähglas handeln. Diese bekannte Faserzusammensetzung hat wärmedämmende Eigenschaften.

Die Druckschrift EP 990856 zeigt eine Anordnung zum Klimatisieren von Räumen. Diese besteht aus Klimaplatten, die aus einem Hydratgemisch bestehen, dem Cellulosefasern und metallische Stoffe zudosiert sind.

Aus der Druckschrift US 6805298 sind Heizpaneele aus Zement bekannt, die Zellulosepartikel und Metallfasern enthalten können.

Die Druckschrift JP 08021069 zeigt ein wärmeleitfähiges Kissen-material, bei welchem Aluminiumpulver in Kokosfasern eingelagert ist.

Der vorliegenden Erfindung liegt die Aufgabe zugrunde, eine Zusammensetzung, Wärmetauscherelemente und Anordnungen bereitzustellen, mittels denen Räume, insbesondere Innenräume temperiert werden können, die sowohl bei Neubauten, aber insbesondere auch bei Sanierungsmassnahmen von Altbauten Verwendung finden, und in variabler Gestaltung angeordnet werden können, wobei preiswerte Ausgangsstoffe zur Herstellung verwendet werden. Die Wärmetauscherelemente sollen geringes Gewicht bei hoher mechanischer Stabilität und Wärmeleitfähigkeit aufweisen und auf einfache Weise kostengünstig herstellbar sein.

Erfindungsgemäss wird die Aufgabe gelöst durch die Merkmale der unabhängigen Patentansprüche.

Die Erfindung betrifft eine Faserzusammensetzung, die cellulosehaltige Fasern und mindestens einen Mischungspartner mit wärmeleitenden Eigenschaften aufweist.

Cellulosehaltige Fasern sind ein Rohstoff mit einem relativ geringen spezifischen Gewicht, womit sie zu einem geringen spezifischen Gewicht der Faserzusammensetzung beitragen. Cellulosefasern sind in verschiedenen Faserlängen verfügbar und lassen sich gut mit unterschiedlichen Mischungspartnern in eine Mischung bringen. Dabei kann der Mischungspartner von einer einzigen Sorte sein, es können aber auch mehrere Mischungspartner vorliegen.

Ausserdem sind Cellulosehaltige Fasern ein preiswerter Ausgangsstoff. Sie können beispielsweise als Altpapier gewonnen werden.

Der Mischungspartner hat wärmeleitende Eigenschaften, das heisst er eignet sich aufgrund seiner Material- und/oder seiner strukturellen Eigenschaften besser für den Transport von Wärme als die cellulosehaltigen Fasern, hat also typischerweise eine höhere Wärmeleitfähigkeit.

Erfindungsgemäß besitzt der mindestens eine Mischungspartner eine Wärmeleitfähigkeit (bei 20°C) von mindestens 50 W/m K, bevorzugt mindestens 220 W/m K.

Da cellulosehaltige Fasern in der Regel eine geringe Wärmeleitfähigkeit besitzen, z.B. liegt die Wärmeleitfähigkeit von gewöhnlichem Papier etwa bei 0.12 W/m K, wird die Wärmeleitfähigkeit der Faserzusammensetzung von dem Mischungspartner dominiert.

Vorteilhafterweise ist ausser der Wärmeleitfähigkeit auch die Wärmekapazität des Mischungspartners ausreichend hoch, die Wärmekapazität ist grösser als 0.8 kJ /kg K.

Die entsprechenden Eigenschaften sind zumeist bei metallischen Mischungspartnern vorhanden.

Besonders vorteilhaft ist die Verwendung von Aluminium als Mischungspartner. Aluminium besitzt eine Wärmeleitfähigkeit (bei 20°C) von etwa 220 W/m K und eine Wärmekapazität von 0,89 kJ/kg K. Gleichzeitig beträgt für Aluminium der Wert der Dichte nur 2700 kg/m³.

Die resultierende Faserzusammensetzung besitzt somit ebenfalls ein geringes spezifisches Gewicht.

Alternativ lassen sich jedoch auch andere wärmeleitfähige Mischungspartner verwenden, zum Beispiel Kupfer mit einer Wärmeleitfähigkeit von 372 W/m K, allerdings bei einer Dichte von 8900 kg/m³.

Erfindungsgemäß liegt der mindestens eine Mischungspartner fein verteilt zwischen den cellulosehaltigen Fasern vor. Damit ergibt sich zumindest lokal eine homogene Masseverteilung des Mischungspartners und eine homogene Verteilung der Wärmeleitfähigkeit in der Faserzusammensetzung, wodurch die Wärme in alle Richtungen gleich schnell transferiert wird.

Durch gezieltes Verteilen der Komponenten lassen sich erfindungsgemäß Masse-, bzw. Leitfähigkeitsgradienten einstellen.

Der mindestens eine Mischungspartner kann in Form von Schichten oder Strängen vorliegen, in einer bevorzugte Ausführungsform liegt er jedoch in Form von Teilchen vor, z.B. als Korn, Granulat, Span oder ähnliches, wobei die typische Maximalgrösse eines Teilchens etwa 0.5 - 10 mm beträgt, das heisst, für ein kugelförmiges Teilchen liegt der Durchmesser in dem genannten Bereich, für asymmetrische Teilchen die grösste Längenausdehnung.

Die Rohstoffkosten für die Faserzusammensetzung lassen sich reduzieren, wenn der mindestens eine Mischungspartner aus Altaluminium gewonnen wird, welches in Form von Spänen, Sägespänen oder Drehspänen anfällt. Diese haben typische Längen von 1-5mm. Als Mischungspartner geeignete Teilchen können auch durch Shreddern von Altaluminium, z.B. von Dosen oder Folien, hergestellt werden. Der anfallende Sekundärrohstoff muss für die Verwendung als Mischungspartner in der Regel nicht aufwändig aufbereitet werden. Eine aus dem Herkunftsprozess resultierende zerklüftete Oberfläche wirkt sich sogar positiv auf eine gute Vermischung mit und auf die Haftung an den cellulosehaltigen Fasern aus.

Die Faserzusammensetzung kann als Rohmaterial formlos vorliegen. Sie kann aber auch durch ein formgebendes Verfahren, z.B. durch Pressen in einer dauerhaften, z.B. plattenartigen Form vorliegen.

Die cellulosehaltigen Fasern, die aneinander eine hohe Haftung aufgrund von Wasserstoffbrückenbindungen im Herstellprozess besitzen, bilden, wenn sie in geeigneter Weise verpresst werden, ein engmaschiges Fasergerüst, in welches die Teilchen des Mischungspartners gitterartig eingebunden werden.

In einer vorteilhaften Ausführungsform ist das Fasergerüst bei verpresster Faserzusammensetzung so dicht ausgebildet, dass zwischen den cellulosehaltigen Fasern und zumindest einem Teil der Oberfläche des mindestens einen Mischungspartners eine feste Bindung besteht.

Die cellulosehaltigen Fasern binden den oder die Mischungspartner in ihre Gitterstruktur ein. Die Mischungspartner besitzen bevorzugt eine zerklüftete und somit grosse Oberfläche, sodass sich den Fasern viel Angriffsfläche bietet.

Die Festigkeit der Bindung wird erhöht, wenn auch zwischen den cellulosehaltigen Fasern und zumindest einem Teil der Oberfläche des mindestens einen Mischungspartners eine chemische Bindung, insbesondere eine Wasserstoffbrückenbindung, besteht.

Durch die Zugabe von Bindemitteln, wie z.B. Methylcellulose, Carboxylmethylcellulose, Stärke, Mannogalaktane oder Alginate, kann die Bindungsfestigkeit erhöht werden. Das Bindemittel kann die Partikel des Mischungspartners umschliessen und seinerseits eine chemische Bindung, insbesondere eine Wasserstoffbrückenbindung, mit den cellulosehaltigen Fasern eingehen.

Die feste Bindung bedeutet, dass die Mischungspartner in dem Fasergerüst eine feste, unverrückbare Position haben und somit eine bei dem Herstellungsprozess definierte, wärmeleitfähige Struktur bilden.

Vorzugsweise beträgt der Gewichtsanteil des mindestens einen Mischungspartners bezogen auf das Gesamtgewicht 90-99 %.

Die Rohstoffkosten können weiter reduziert werden, wenn die cellulosehaltigen Fasern aus Altcellulose, insbesondere Altpapier, gewonnen werden. Diese werden vor der Mischung nass aufgeschlossen. Die Faserlänge variiert je nach Aufschlussgrad und Recyclinggrad. Faserlängen von Zellstoff aus Laubhölzern betragen etwa 1mm, von Nadelhölzern bis zu etwa 4mm. Sind die Fasern aus Altpapier gewonnen, so liegen wesentlich kürzere Faserlängen vor.

Der Faserzusammensetzung kann ausserdem noch eine feuerhemmende Substanz, z.B. ein Borsalz, ein Aluminiumsilikat, ein Aluminiumhydroxid, ein Phosphat, ein Gips und/oder ein Zement, zugegeben werden. Dadurch wird der Einsatzbereich der Faserzusammensetzung erhöht, sie kann z.B. einer grösseren Temperaturspanne ausgesetzt werden.

Die Erfindung betrifft des Weiteren die Verwendung einer Faserzusammensetzung, wie sie oben beschrieben wurde, als Wärmeleitstoff. Obwohl ein Basisbestandteil der Faserzusammensetzung, die cellulosehaltigen Fasern, selbst nur eine geringe Wärmeleitfähigkeit aufweisen, ist die Faserzusammensetzung in der beanspruchten Mischung als Wärmeleitstoff geeignet. Dieser kann für Wärmebrücken oder in Wärmetauscherelementen eingesetzt werden.

Die Erfindung betrifft ausserdem ein Verfahren zur Herstellung einer Faserzusammensetzung mit den folgende Verfahrensschritten:
(i)Aufschluss der Fasern in Wasser,
(ii)Zugabe mindestens eines Mischungspartners,
(iii)Entwässerung unter Pressdruck.

Der Aufschluss der Fasern erfolgt bevorzugt bei einem Verhältnis von etwa 80-90% Wasser zu etwa 10-20% Restbestandteilen. Die Zugabe des mindestens einen Mischungspartners erfolgt im nassen Zustand, was einer guten Durchmischung zuträglich ist. Die Entwässerung wird in einer Presse vorgenommen. Mit der Höhe des Pressdrucks lässt sich der Vernetzungsgrad der Fasern, die Dichte und die Festigkeit der Faserzusammensetzung und letztlich auch die Wärmeleitfähigkeit der Faserzusammensetzung einstellen.

Je höher der Pressdruck, desto besser ist der Kontakt der Komponenten und desto höher ist der resultierende Wärmeleitwert.

Der wärmeleitfähige Mischungspartner ist nach Anwendung eines entsprechend hohen Pressdrucks von den Fasern eingeschlossen. Da nur wenig Luft an die Teilchen gelangen kann, erfolgt kaum Oxidation, wenn es sich um Aluminium oder um andere mit Sauerstoff reaktive Materialien handelt.

Während der Entwässerung kann eine Formgebung durch einen Giess- oder Pressvorgang in eine Gussform erfolgen. Dabei besteht die Möglichkeit der freien Formgebung. Die Faserzusammensetzung kann also je nach geplantem Verwendungszweck als festes Element in beliebiger Form zur Verfügung gestellt werden. Die bevorzugte Form ist jedoch die Plattenform, da sie Praktikabilität für Transport und Montage mit einer grossen Oberfläche verbindet.

Nach dem Entwässern der Faserzusammensetzung hat diese in der Regel eine feste Konsistenz und kann mit den üblichen Methoden, wie Sägen, Brechen, Schleifen, Bohren etc., weiter in eine gewünschte Form gebracht werden.

Die Erfindung betrifft ausserdem ein Wärmetauscherelement mit mindestens einer integrierten Heiz- und/oder Kühlleitung, wobei das Wärmetauscherelement einen Wärmeleitstoff enthält, der im Wesentlichen aus einer oben beschriebenen Faserzusammensetzung besteht.

Das Wärmetauscherelement kann zum Temperieren von mit dem Wärmetauscherelement in Kontakt stehendem Gas, Feststoffen oder Flüssigkeiten verwendet werden.

Das Wärmetauscherelement ist insbesondere zum Kühlen und/oder zum Heizen von Luft in Innenräumen einsetzbar.

Bei der Leitung kann es sich um eine stromführende Heizleitung handeln oder um ein Leitung, die von einem Wärmeträgermedium oder einem Kühlmittel durchströmbar ist. Bevorzugt ist die Heiz- und/oder Kühlleitung als ein fluidführendes Rohr ausgebildet. Dieses ist möglichst dünnwandig ausgeführt, damit der Temperaturaustausch zwischen dem Wärmeträgermedium und dem Wärmeleitstoff möglichst verlustfrei erfolgen kann.

Die Heiz- und/oder Kühlleitung sorgt, beispielsweise über einen Wärmeeintrag, für eine Temperaturänderung in dem Wärmetauscher, die von diesem über seine Oberfläche an die Umgebung weitergeleitet wird.

Die Erfindung betrifft gemäss einem weiteren Aspekt ausserdem ein Wärmetauscherelement mit mindestens einer integrierten Heiz- und/oder Kühlleitung, wobei die mindestens eine Heiz- und/oder Kühlleitung durch wenigstens ein Wellrohr gebildet ist. Anderweitig ausgebildete Rohre, die bezogen auf das Volumen eine möglichst grosse Aussenoberfläche aufweisen, sind ebenfalls als Heiz- und/oder Kühlleitung geeignet.

Eine bevorzugte Ausführungsform ist eine Kombination von einem Wärmeaustauscherelement mit einem solchen Wellrohr und einem Wärmeleitstoff in einer Tragstruktur des Wärmetauscherelements.

Das Wellrohr ist ein fluidführendes Rohr mit einer besonders grossen Aussenoberfläche. Die Temperatur des durchströmenden Wärmeträgers kann wegen des grossen Kontaktbereichs auf der Flussstrecke effektiv mit der Umgebung des Wellrohrs ausgetauscht werden. Ausserdem sorgen die im Inneren des Wellrohrs auftretenden Turbulenzen für einen sehr guten Wärmetransport von dem Wärmeträgermedium in die Wand des Wellrohrs.

Als Heiz- und/oder Kühlleitung sind daher auch Rohre geeignet, die eine spezielle Ausgestaltung im Inneren haben, welche Turbulenzen des Fluids fördern, wie zum Beispiel Prallrohre, die eine turbulenzfördernde Einformung der Rohrwand aufweisen.

Ein Wellrohr kann in vielfältigen Formen verlegt werden, da Wellrohre im Hinblick auf die Wahl von Krümmungsradien flexibel sind. Die Leitungsrohre lassen sich in diesem Fall an vielfältige Geometrien anpassen, ohne dass vorgeformte Rohrteile miteinander verschweisst werden müssten.

Steht die Aussenoberfläche des Wellrohrs in Kontakt mit einem Wärmeleitstoff, so ergibt sich in Kombination ein leistungsfähiges Wärmetauscherelement.

Bevorzugt handelt es sich bei dem Wärmeleitstoff um eine Faserzusammensetzung wie oben beschrieben. Diese Zusammensetzung kann sich perfekt an die Aussenoberfläche des Wellrohrs anpassen und ermöglicht einen idealen Wärmekontakt zwischen Leitung und Wärmeleitstoff. Es können hohe Bindungsfestigkeiten zwischen der Faserzusammensetzung und dem Wellrohr erreicht werden, sodass das Wellrohr stabil in der Faserzusammensetzung eingebunden ist. Die grosse Oberfläche des Rohrs sorgt also zum einen für einen guten Wärmeaustausch zwischen Fluid und Rohr, zum andern für eine gute Haftung zwischen Rohr und Wärmeleitstoff, da sich der Wärmleitstoff mit der Oberfläche des Rohrs verkrallen kann, und damit für einen guten Wärmeaustausch zwischen Rohr und Wärmeleitstoff.

In einer vorteilhaften Ausführung ist die Heiz- und/oder Kühlleitung vollständig oder teilweise in den Wärmeleitstoff eingebettet.

Beispielsweise steht fast die gesamte Aussenoberfläche der Leitung, bis auf die Bereiche der Zu- und Ableitung, mit dem Wärmeleitstoff in Kontakt.

In einer alternativen Ausführungsform kann die Heiz- und/oder Kühlleitung auch teilweise aus dem Wärmeleitstoff herausragen und zur Temperaturabstrahlung in die Umgebung beitragen.

Die Heiz- und/oder Kühlleitung ist bevorzugt aus Edelstahl, Kupfer, Normalstahl, Aluminium, Kunststoff oder einem Verbundstoff gefertigt. Bei dem Verbundstoff kann es sich um eine Kombination aus Metallen und Kunststoffen handeln. Das Material der Leitung beeinflusst neben den Wärmeaustauscheigenschaften die Stabilität und die Handhabbarkeit des Wärmeaustauscherelements.

In einer vorteilhaften Ausführung der Erfindung liegt der Heiz- und/oder Kühlleiter in einer mäandernden Konfiguration vor. Das Hin- und Herführen der Kühlleitung vergrössert die Kontaktfläche für den Temperaturaustausch und im Falle von fluidführenden Rohren die Menge des durchströhmenden Wärmeträgermediums. Wie schon beschrieben, lässt sich eine derartige Konfiguration besonders einfach mit einem Wellrohr erreichen.

Wird eine bestimmte Fläche des Wärmeaustauscherelements einfach von einer Heiz- und/oder Kühlleiterkonfiguration durchzogen, liegt also eine Gleichstromkonfiguration vor, so bildet sich entlang des Heiz- und/oder Kühlleiters in dem Wärmeaustauscherelement ein Temperaturgradient. Alternativ kann die Heiz- und/oder Kühlleiterkonfiguration in einer Gegenstromkonfiguration verlegt werden, das heisst zwei Heiz- und/oder Kühlleiter werden in etwa parallel geführt und gegenläufig durchströmt.

Als weitere Möglichkeit kann eine Kreuzstromkonfiguration gewählt werden, in welcher Wärmeträgermedien quer zueinander fliessen.

In einer bevorzugten Ausführungsform ist das Wärmetauscherelement auf mindestens einer Seite mit einer wärmedämmenden Schicht versehen. Die Schicht verringert eine Wärmeabstrahlung oder - aufnahme über diese Seite. Insbesondere wird eine in Richtung der nicht isolierten Oberflächen gerichtete Wärmeabgabe ermöglicht.

Die Wärmetauscherelemente werden bevorzugt plattenförmig angefertigt. Es ergeben sich dabei die schon oben aufgeführten Vorteile.

Bei dem Verpressvorgang verteilen sich die Komponenten um die Oberfläche der Leitung, insbesondere dringen Fasern und Teilchen in die Rillen eines Wellrohrs, und es entsteht nach dem Trocknen ein perfekter Kontakt zwischen Wärmeleitstoff und Leitung. Die Leitung ist fest in die Struktur der Faserzusammensetzung eingebunden, was vorteilhaft für den Wärmeaustausch und die mechanische Stabilität ist.

Die Erfindung betrifft ausserdem ein Verfahren zur Herstellung eines Wärmetauscherelements mit mindestens einer integrierten Heiz- oder Kühlleitung mit den folgenden Verfahrensschritten:
(i)Herstellung einer Mischsuspension aus cellulosehaltigen Fasern, Mischungspartner, der bei 20°C eine Wärmeleitfähigkeit von mindestens 200 W/m K besitzt, Wasser und/oder Bindemittel,
(ii) Anordnen mindestens einer Heiz- und/oder Kühlleitung zu einer Leitungskonfiguration in einer Pressform,
(iii) Einfüllen der Mischsuspension in die Pressform,
(iv) Festpressen und Entwässern,
(v) Trocknen.

Die Mischsuspension entspricht bevorzugt dem oben beschriebenen Nassaufschluss zur Herstellung der Faserzusammensetzung. Das heisst, es liegt eine Verteilung von etwa 80-90% Wasser gegenüber etwa 10-20% Feststoffanteil vor.

Der Nassaufschluss ermöglicht durch Wahl der Gussform eine grosse Vielfalt in der Formgebung. Gleichzeitig erlaubt er im Gegensatz zu einer grundsätzlich ebenfalls möglichen Trockenverpressung eine optimale Bindung zwischen den Komponenten, eine gute Verteilung in der Form und um die Oberfläche der Heiz- und/oder Kühlleitungen. Durch den nachfolgenden Press- und Entwässerungsprozess werden Lufteinschlüsse weitgehend vermieden.

In einem weiteren Verfahrensschritt kann auf einer oder mehreren Seiten des Wärmetauscherelements eine wärmedämmende Schicht aufgebracht werden.

Die Erfindung betrifft zudem ein Wärmetauschsystem mit Wärmetauscherelementen, die aneinander koppelbar sind.

Die Kopplung betrifft zum einen die Verbindbarkeit der Heiz- und/oder Kühlleitungen. Es kann zum anderen vorgesehen sein, dass die Wärmeleitstoffe mindestens zweier Wärmetauscherelemente miteinander in Kontakt und/oder in Verbindung gebracht werden.

Vorteilhafterweise besitzen die Heiz- und/oder Kühlleitungen endseitig Verbindungselemente, z.B. Stecker oder Muffen, mittels welcher sie an weitere Heiz- und/oder Kühlleitungen oder an Versorgungsleitungen koppelbar sind, sodass entweder der Strom oder das Wärmeträgermedium von der Versorgungsleitung oder einem weiteren Wärmetauscherelement in die Heiz- und/oder Kühlleitungen fliessen kann.

Mehrere Wärmetauscherelemente können so als ein Wärmetauschsystem zusammenwirken, das nur einen zuleitenden und einen ableitenden Versorgungsanschluss benötigt.

Die Wärmetauscher können entweder passgenau für bestimmte Zwecke gefertigt werden, vorteilhafterweise wird das Wärmetauschsystem jedoch aus vorgefertigten Wärmetauscherelementen nach einem Baukastenprinzip zusammengesetzt.

Derartige Wärmetauschsysteme sind besonders dafür geeignet, im Rahmen von Sanierungsmassnahmen Heizungsvorrichtungen, insbesondere Wand- und Fussbodenheizungen nachzurüsten. Die leicht transportablen Wärmetauscherelemente können vor Ort zu einem passenden Heizungssystem zusammengefügt werden und auf bestehende Wand- und/oder Bodenflächen aufgebracht werden.

Die Wärmetauscherelemente mit dem Wärmeleitstoff aus der beschriebenen Faserzusammensetzung weisen eine genügend grosse Festigkeit und Stabilität auf, sodass die Wärmertauscherelemente selbsttragend sind und nicht in eine separate Trägerstruktur eingepasst werden müssen.

Die Herstellung der Faserzusammensetzung bzw. der Elemente erfolgt dabei bevorzugt gemäss der Technologie aus DE 195 39 304 welche hiermit durch Querverweis ausdrücklich in die vorliegende Anmeldung aufgenommen wird.

Die Erfindung wird im Folgenden in Ausführungsbeispielen und anhand von Zeichnungen näher erläutert. Es zeigen:
- Figur 1: eine schematische Darstellung der Struktur eines Beispiels für eine erfindungsgemässe Faserzusammensetzung;
- Figur 2: eine schematische Darstellung einer perspektivischen Ansicht eines Beispiels für ein erfindungsgemässes Wärmetauscherelement;
- Figur 3: ein Flussdiagramm mit einer schematischen Darstellung von Herstellungsschritten.

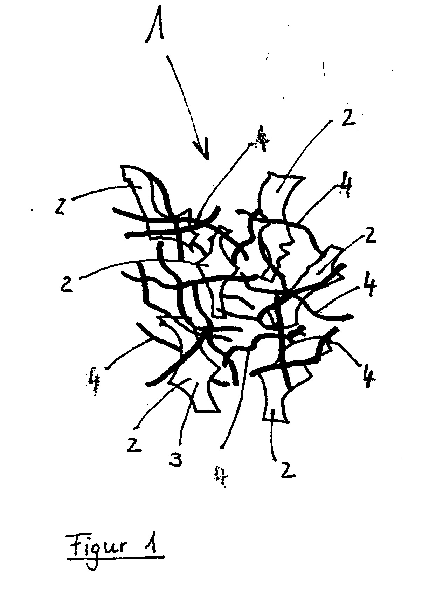

Figur 1 zeigt eine schematische Darstellung eines Beispiels für eine erfindungsgemässe Faserzusammensetzung 1. Als Mischungspartner 2 sind wärmeleitende Aluminiumteilchen 3 zwischen den Cellulosehaltigen Fasern 4 fein verteilt, das heisst, die Masseverteilung ist lokal homogen, es treten keine Teilchencluster des Mischungspartners 2 auf, was zu einer lokal isotropen Verteilung der Wärmeleitfähigkeit führt.

Die cellulosehaltigen Fasern 4 bilden ein feinmaschiges Netzwerk, das zusammen mit den wärmeleitenden Aluminiumteilchen 3 zu einer festen Faserzusammensetzung 1 führt.

Die Aluminiumteilchen 3 haben typische Längen zwischen 1 und 5 mm, die Faserlängen der Cellulosehaltigen Fasern 4 sind kleiner als 2 mm. Der Gewichtsanteil der Aluminiumteilchen 3 bezogen auf das Gesamtgewicht beträgt in etwa 90-95%.

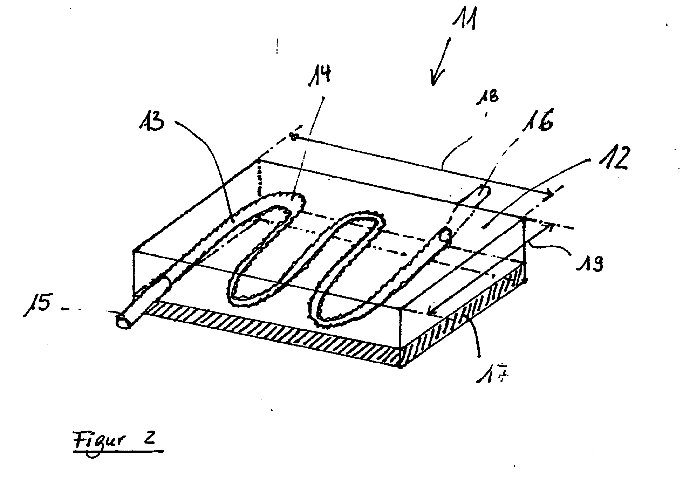

Figur 2 zeigt eine schematische Darstellung einer perspektivischen Ansicht eines Beispiels für ein erfindungsgemässes Wärmetauscherelement 11. Das Wärmetauscherelement 11 umfasst einen Wärmeleitstoff 12, insbesondere aus einer beschriebenen Faserzusammensetzung, in welchem als Heiz- und/oder Kühlleitung 13 ein Wellrohr 14 in einer mäandernden Konfiguration eingebettet ist. Das Wellrohr 14 ist vollständig von dem nicht weiter im Detail dargestellten Wärmeleitstoff 12 umgeben, lediglich endseitig weisen ein Anschluss 15 für einen Zuleitung und ein Anschluss 16 für eine Ableitung aus dem Wärmeleitstoff 12 heraus. Die Anschlüsse 15, 16 lassen sich mit in der Figur nicht dargestellten, entsprechenden Anschlüssen einer Versorgungsleitung oder weiterer Wärmeaustauscherelemente verbinden. Das Wärmetauscherelement 11 ist einseitig mit einem Isolationsmaterial 17 beschichtet.

Ein Wärmetauscherelement 11 hat eine typische Länge 18 von 1,5m, eine typische Breite 19 von 0,7m und wiegt dabei etwa 20kg. Die Abmessungen sind so gewählt, dass die Platten leicht zu transportieren, zu verladen und zu montieren sind.

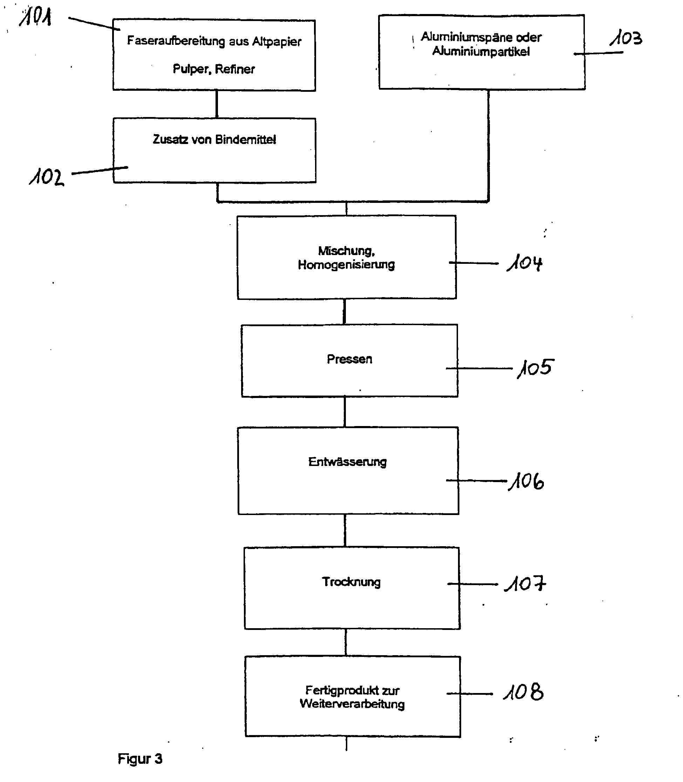

Figur 3 zeigt schematisch den Herstellvorgang anhand eines Flussdiagramms.

In einem ersten Schritt 101 erfolgt eine Faseraufbereitung aus Altpapier in einem Pulper und einem Refiner. Der Faseraufbereitung wird in einem Schritt 102 ein Bindemittel zugesetzt.

In die so erhaltene Mischung wird ein in Schritt 103 bereitgestellter Mischungspartner, hier Alumimiumspäne oder Aluminiumpulver, zugegeben. In Schritt 104 erfolgt die Mischung und Homogenisierung der Komponenten. Hierbei verteilen sich die Aluminiumteilchen fein in der Faserzusammensetzung.

Die homogene Masse wird in einem nachfolgenden Schritt 105 gepresst und in einem weiteren Schritt 106 entwässert. Das Pressen kann in einer Pressform erfolgen, die nach dem eigentlichen Pressvorgang entwässert wird, oder die Masse wird in eine kontinuierliche Pressanlage aufgebracht, in der auch für einen kontinuierliche Entwässerung gesorgt wird.

Nach dem Entwässern erfolgt in einem nächsten Schritt 107 die Trocknung. Diese kann als Konvektionstrocknung bei einer Temperatur von 60 - 120 °C erfolgen. Alternativ kann das gepresste Gut durch Infrarotbestrahlung, durch Mikrowellenbestrahlung oder mit heissem Dampf getrocknet werden. Da das Produkt durch seinen Celluloseanteil hygroskopische Eigenschaften hat, wird die Trocknung nur bis zur Erreichung der Umgebungsfeuchtigkeit durchgeführt. Bei einer weiteren Trocknung würde das Material wieder Feuchtigkeit aus der Umgebung aufnehmen.

Anschliessend, in Schritt 108, ist das Fertigprodukt zur Weiterverarbeitung, z.B. zur Verpackung, zum Transport oder zur Montage, bereit.

## Patentansprüche

1. Faserzusammensetzung
aus einerseits cellulosehaltigen Fasern (4) und andererseits mindestens einen Mischungspartner (2) mit wärmeleitenden Eigenschaften, der bei 20°C eine Wärmeleitfähigkeit von mindestens 50 W/m K , insbesondere mindestens 200 W/m K besitzt, wobei der mindestens eine Mischungspartner (2) fein verteilt zwischen den cellulosehaltigen Fasern (4) vorliegt **dadurch gekennzeichnet dass** die Komponenten derart gezielt verteilt sind, dass Masse- bzw. Leitfähigkeitsgradienten eingestellt sind.

2. Faserzusammensetzung nach Anspruch 1, **dadurch gekennzeichnet, dass** der mindestens eine Mischungspartner (2) metallisch ist.

3. Faserzusammensetzung nach mindestens einem der vorhergehenden Ansprüche, **dadurch gekennzeichnet, dass** der mindestens eine Mischungspartner (2) aus Aluminium ist.

4. Faserzusammensetzung nach mindestens einem der vorhergehenden Ansprüche, **dadurch gekennzeichnet, dass** der mindestens eine Mischungspartner (2) in Form von Teilchen, z.B. als Korn, Granulat, Span oder ähnliches vorliegt, wobei die typische Maximalausdehnung eines Teilchens vorzugsweise etwa 0.5 - 10 mm beträgt.

5. Faserzusammensetzung nach mindestens einem der vorhergehenden Ansprüche, **dadurch gekennzeichnet, dass** zwischen den cellulosehaltigen Fasern (4) eine feste Bindung, insbesondere eine chemische Bindung wie Wasserstoffbindung, besteht.

6. Faserzusammensetzung nach mindestens einem der vorhergehenden Ansprüche, **dadurch gekennzeichnet, dass** der Gewichtsanteil des mindestens einen Mischungspartners (2) bezogen auf das Gesamtgewicht 90 - 99 % beträgt.

7. Faserzusammensetzung nach mindestens einem der vorhergehenden Ansprüche, **dadurch gekennzeichnet, dass** die cellulosehaltigen Fasern (4) aus Altcellulose, insbesondere Altpapier, erzeugt sind.

8. Faserzusammensetzung nach mindestens einem der vorhergehenden Ansprüche, **dadurch gekennzeichnet, dass** die Faserzusammensetzung (1) eine feuerhemmende Substanz, z.B. ein Borsalz, ein Aluminiumsilikat, ein Aluminiumhydroxid, ein Phosphat, ein Gips und/oder ein Zement, aufweist.

9. Verwendung einer Faserzusammensetzung gemäss mindestens einem der Ansprüche 1-8 als Wärmeleitstoff (12).

10. Verfahren zur Herstellung einer Faserzusammensetzung gemäss mindestens einem der Ansprüche 1-8, mit den folgenden Verfahrensschritten
(i) Aufschluss von cellulosehaltigen Fasern (4) in Wasser;
(ii) vor oder nach Schritt (i) Zugabe mindestens eines Mischungspartners (2) mit wärmeleitenden Eigenschaften, der bei 20°C eine Wärmeleitfähigkeit von mindestens 200 W/m K besitzt;
(iii)Pressen und vorzugsweise Entwässerung unter Pressdruck; **dadurch gekennzeichnet, dass** durch gezieltes Verteilen der Komponenten ein Masse- bzw. Leitfähigkeitsgradient eingestellt wird.

11. Wärmetauscherelement mit mindestens einer integrierten Heiz- und/oder Kühlleitung, **dadurch gekennzeichnet, dass** das Wärmetauscherelement einen Wärmeleitstoff (12) enthält, der im Wesentlichen aus einer Faserzusammensetzung (1) gemäss einem der Ansprüche 1-8 besteht.

12. Wärmetauscherelement nach Anspruch 11, **dadurch gekennzeichnet, dass** mindestens eine Heiz- und/oder Kühlleitung (13) als ein fluidführendes Rohr ausgebildet ist.

13. Wärmetauscherelement mit mindestens einer integrierten Heiz- und/oder Kühlleitung, insbesondere nach einem der Ansprüche 11 bis 12, **dadurch gekennzeichnet, dass** mindestens eine Heiz- und/oder Kühlleitung (13) ein Wellrohr (14) ist.

14. Wärmetauscherelement nach einem der Ansprüche 11 bis 13, **dadurch gekennzeichnet, dass** die mindestens eine Heiz- und/oder Kühlleitung (13) in den Wärmeleitstoff (12) eingebettet ist.

15. Wärmetauscherelement nach mindestens einem der Ansprüche 11 bis 14, **dadurch gekennzeichnet, dass** die Heiz- und/oder Kühlleitung (13) aus Edelstahl, Kupfer, Normalstahl, Aluminium, Kunststoff oder einem Verbundstoff gefertigt ist.

16. Wärmetauscherelement nach mindestens einem der Ansprüche 11 bis 15, **dadurch gekennzeichnet, dass** die Heiz- und/oder Kühlleitung (13) in einer mäandernden Konfiguration vorläuft.

17. Wärmetauscherelement nach mindestens einem der Ansprüche 11 bis 16, **dadurch gekennzeichnet, dass** das Wärmetauscherelement (11) auf mindestens einer Seite mit einer wärmedämmenden Schicht (17) versehen ist.

18. Wärmetauscherelement nach mindestens einem der Ansprüche 11 bis 17, **dadurch gekennzeichnet, dass** das Wärmetauscherelement (11) plattenförmig ausgestaltet ist.

19. Verfahren zur Herstellung eines Wärmetauscherelements mit mindestens einer integrierten Heiz- oder Kühlleitung (13) insbesondere nach Ansprüchen 11 bis 18, mit den folgenden Verfahrensschritten
(i) Herstellung einer Mischsuspension aus cellulosehaltigen Fasern (4), mindestens einem Mischungspartner (2), der bei 20°C eine Wärmeleitfähigkeit von mindestens 200 W/m K besitzt, Wasser und/oder Bindemittel;
(ii) Anordnen der mindestens einen Heiz- und/oder Kühlleitung (13) zu einer Leitungskonfiguration in einer Pressform;
(iii) Einfüllen der Mischsuspension in die Pressform;
(iv) Festpressen und vorzugsweise gleichzeitiges Entwässern;
(v) Trocknen,
**dadurch gekennzeichnet, dass** durch gezieltes Verteilen der Komponenten ein Masse- bzw. Leitfähigkeitsgradient eingestellt wird.

20. Verfahren gemäss Anspruch 19, **dadurch gekennzeichnet, dass** in einem nachfolgenden Verfahrensschritt eine wärmedämmende Schicht (17) aufgebracht wird.

21. Wärmetauschsystem aus Wärmetauscherelementen gemäss mindestens einem der Ansprüche 11 bis 18, wobei die Wärmetauscherelemente (11) aneinander koppelbar sind.

22. Wärmetauschsystem gemäss Anspruch 21, **dadurch gekennzeichnet, dass** die Wärmetauscherelemente (11) vorgefertigte Wärmetauscherelemente (11) sind.

23. Wärmetauschsystem gemäss einem der Ansprüche 21 oder 22, wobei die Leitungskonfiguration jedes Wärmetauscherelementes (11) mindestens zwei Anschlusselemente (15, 16) aufweist, die jeweils mit einem Anschlusselement (15, 16) eines weiteren Wärmetauscherelementes (11) und/oder mit einem Versorgungselement verbindbar sind.

24. Verwendung eines Wärmetauschsystems gemäss einem der Ansprüche 21 bis 23 zur Fertigung einer Wand- oder Bodenheizung, insbesondere einer nachträglich in einem Raum anbringbaren Fussbodenheizung.

## Claims

1. Fibre composition made of, on the one hand, cellulose-containing fibres (4) and, on the other hand, at least one other mixture ingredient (2) which has thermally conductive properties and which has a thermal conductivity of at least 50 W/m K, in particular at least 200 W/m K, at 20°C, where the at least one other mixture ingredient (2) is present in finely distributed form between the cellulose-containing fibres (4), **characterized in that** the components have been distributed specifically in such a way as to establish mass gradients or conductivity gradients.

2. Fibre composition according to Claim 1, **characterized in that** the at least one other mixture ingredient (2) is metallic.

3. Fibre composition according to at least one of the preceding claims, **characterized in that** the at least one other mixture ingredient (2) is composed of aluminium.

4. Fibre composition according to at least one of the preceding claims, **characterized in that** the at least one other mixture ingredient (2) is present in the form of particles, e.g. as grains, granules, shavings or the like, where the typical maximum dimension of a particle is preferably about 0.5-10 mm.

5. Fibre composition according to at least one of the preceding claims, **characterized in that**, between the cellulose-containing fibres (4) there is strong bonding, in particular chemical bonding such as hydrogen bonding.

6. Fibre composition according to at least one of the preceding claims, **characterized in that** the proportion by weight of the at least one other mixture ingredient (2), based on the total weight, is from 90 to 99%.

7. Fibre composition according to at least one of the preceding claims, **characterized in that** the cellulose-containing fibres (4) have been produced from used cellulose, in particular used paper.

8. Fibre composition according to at least one of the preceding claims, **characterized in that** the fibre composition (1) comprises a fire-retardant substance, e.g. a boron salt, an aluminium silicate, an aluminium hydroxide, a phosphate, a gypsum and/or a cement.

9. Use of a fibre composition according to at least one of Claims 1-8 as thermally conductive substance (12).

10. Process for producing a fibre composition according to at least one of Claims 1-8, with the following steps
(i) digestion of cellulose-containing fibres (4) in water;
(ii) prior to or after step (i), addition of at least one other mixture ingredient (2) which has thermally conductive properties and which has a thermal conductivity of at least 200 W/m K at 20°C;
(iii) compression and preferably dewatering under pressure;
**characterized in that** by virtue of specific distribution of the components a mass gradient or conductivity gradient is established.

11. Heat-exchanger element with at least one integrated heating and/or cooling line, **characterized in that** the heat-exchanger element comprises a thermally conductive substance (12) which consists in essence of a fibre composition (1) according to any of Claims 1-8.

12. Heat-exchanger element according to Claim 11, **characterized in that** at least one heating and/or cooling line (13) is a fluid-conducting pipe.

13. Heat-exchanger element with at least one integrated heating and/or cooling line, in particular according to any of Claims 11 to 12, **characterized in that** at least one heating and/or cooling line (13) is a corrugated pipe (14).

14. Heat-exchanger element according to any of Claims 11 to 13, **characterized in that** the at least one heating and/or cooling line (13) has been embedded into the thermally conductive substance (12).

15. Heat-exchanger element according to at least one of Claims 11 to 14, **characterized in that** the heating and/or cooling line (13) has been manufactured from normal or stainless steel, copper, aluminium, plastic or a composite substance.

16. Heat-exchanger element according to at least one of Claims 11 to 15, **characterized in that** the heating and/or cooling line (13) has a meandering configuration.

17. Heat-exchanger element according to at least one of Claims 11 to 16, **characterized in that** the heat-exchanger element (11) has been provided on
at least one side with a thermally insulating layer (17).

18. Heat-exchanger element according to at least one of Claims 11 to 17, **characterized in that** the heat-exchanger element (11) has been designed in the form of a sheet.

19. Process for producing a heat-exchanger element with at least one integrated heating or cooling line (13) in particular according to Claims 11 to 18, with the following steps
(i) production of a mixed suspension made of cellulose-containing fibres (4) and of at least one other mixture ingredient (2) which has a thermal conductivity of at least 200 W/m K at 20°C, water and/or binder;
(ii) arrangement of the at least one heating and/or cooling line (13) to give a line configuration in a compression mould;
(iii) charging of the mixed suspension to the compression mould;
(iv) full compression and preferably simultaneous dewatering;
(v) drying,
**characterized in that** a mass gradient or conductivity gradient is established by virtue of specific distribution of the components.

20. Process according to Claim 19, **characterized in that** a thermally insulating layer (17) is applied in a subsequent step.

21. Heat-exchange system made of heat-exchanger elements according to at least one of Claims 11 to 18, wherein heat-exchanger elements (11) can be coupled to one another.

22. Heat-exchange system according to Claim 21, **characterized in that** the heat-exchanger elements (11) are prefabricated heat-exchanger elements (11).

23. Heat-exchange system according to Claim 21 or 22, where the line configuration of each heat-exchanger element (11) comprises at least two connection elements (15, 16) which respectively can be connected to a connection element (15, 16) of another heat-exchanger element (11) and/or to a supply element.

24. Use of a heat-exchange system according to any of Claims 21 to 23 for the manufacture of a wall- or floor-heating system, in particular of a floor-heating system which can be installed subsequently in a room.

## Revendications

1. Composition de fibres, constituée d'une part de fibres cellulosiques (4) et d'autre part d'au moins un partenaire de mélange (2) à propriétés thermoconductrices, qui possède à 20 °C une conductivité thermique d'au moins 50 W/mK, notamment d'au moins 200 W/mK, le ou les partenaires de mélange (2) étant finement dispersés entre les fibres cellulosiques (4), **caractérisée en ce que** les composants sont dispersés de manière ciblée afin de mettre en place des gradients de masse ou de conductivité.

2. Composition de fibres selon la revendication 1, **caractérisée en ce que** le ou les partenaires de mélange (2) sont métalliques.

3. Composition de fibres selon au moins l'une quelconque des revendications précédentes, **caractérisée en ce que** le ou les partenaires de mélange (2) sont en aluminium.

4. Composition de fibres selon au moins l'une quelconque des revendications précédentes, **caractérisée en ce que** le ou les partenaires de mélange (2) se présentent sous la forme de particules, p. ex. sous la forme de grains, de granulats, de copeaux ou analogues, la dimension maximale type d'une particule étant de préférence d'environ 0,5 à 10 mm.

5. Composition de fibres selon au moins l'une quelconque des revendications précédentes, **caractérisée en ce qu'**une liaison fixe, notamment une liaison chimique telle qu'une liaison hydrogène, existe entre les fibres cellulosiques (4).

6. Composition de fibres selon au moins l'une quelconque des revendications précédentes, **caractérisée en ce que** la proportion en poids du ou des partenaires de mélange (2) par rapport au poids total est de 90 à 99 %.

7. Composition de fibres selon au moins l'une quelconque des revendications précédentes, **caractérisée en ce que** les fibres cellulosiques (4) sont formées à partir de cellulose usagée, notamment de papiers usagés.

8. Composition de fibres selon au moins l'une quelconque des revendications précédentes, **caractérisée en ce que** la composition de fibres (1) comprend une substance ignifuge, p. ex. un sel de bore, un silicate d'aluminium, un hydroxyde d'aluminium, un phosphate, un gypse et/ou un ciment.

9. Utilisation d'une composition de fibres selon au moins l'une quelconque des revendications 1 à 8 en tant que conducteur de chaleur (12).

10. Procédé de fabrication d'une composition de fibres selon au moins l'une quelconque des revendications 1 à 8, comprenant les étapes de procédé suivantes :
(i) la dispersion de fibres cellulosiques (4) dans de l'eau ;
(ii) avant ou après l'étape (i), l'ajout d'au moins un partenaire de mélange (2) à propriétés thermoconductrices, qui possède à 20 °C une conductivité thermique d'au moins 200 W/mK ;
(iii) la compression et de préférence la déshydratation
sous une pression de compression ;
**caractérisé en ce qu'**un gradient de masse ou de
conductivité est mis en place par une dispersion ciblée des composants.

11. Élément d'échange de chaleur comprenant au moins une conduite de chauffage et/ou de refroidissement intégrée, **caractérisé en ce que** l'élément d'échange de chaleur contient un conducteur de chaleur (12) qui est essentiellement constitué d'une composition de fibres (1) selon l'une quelconque des revendications 1 à 8.

12. Élément d'échange de chaleur selon la revendication 11, **caractérisée en ce qu'**au moins une conduite de chauffage et/ou de refroidissement (13) est configurée sous la forme d'un tube conduisant un fluide.

13. Élément d'échange de chaleur comprenant au moins une conduite de chauffage et/ou de refroidissement intégrée, notamment selon l'une quelconque des revendications 11 à 12, **caractérisé en ce qu'**au moins une conduite de chauffage et/ou de refroidissement (13) est un tube ondulé (14).

14. Élément d'échange de chaleur selon l'une quelconque des revendications 11 à 13, **caractérisé en ce que** la ou les conduites de chauffage et/ou de refroidissement (13) sont incorporées dans le conducteur de chaleur (12).

15. Élément d'échange de chaleur selon au moins l'une quelconque des revendications 11 à 14, **caractérisé en ce que** la conduite de chauffage et/ou de refroidissement (13) est fabriquée en acier inoxydable, cuivre, acier normal, aluminium, plastique ou en un matériau composite.

16. Élément d'échange de chaleur selon au moins l'une quelconque des revendications 11 à 15, **caractérisé en ce que** la conduite de chauffage et/ou de refroidissement (13) a une configuration sinueuse.

17. Élément d'échange de chaleur selon au moins l'une quelconque des revendications 11 à 16, **caractérisé en ce que** l'élément d'échange de chaleur (11) est muni d'une couche thermiquement isolante (17) sur au moins un côté.

18. Élément d'échange de chaleur selon au moins l'une quelconque des revendications 11 à 17, **caractérisé en ce que** l'élément d'échange de chaleur (11) est configuré en forme de plaque.

19. Procédé de fabrication d'un élément d'échange de chaleur comprenant au moins une conduite de chauffage ou de refroidissement intégrée (13), notamment selon les revendications 11 à 18, comprenant les étapes de procédé suivantes :
(i) la fabrication d'une suspension de mélange constituée de fibres cellulosiques (4), d'au moins un partenaire de mélange (2), qui possède à 20 °C une conductivité thermique d'au moins 200 W/mK, d'eau et/ou d'un liant ;
(ii) l'agencement de la ou des conduites de chauffage et/ou de refroidissement (13) en une configuration de conduite dans un moule de compression ;
(iii) le remplissage du moule de compression avec la suspension de mélange ;
(iv) la compression et de préférence la déshydratation simultanée ;
(v) le séchage ;
**caractérisé en ce qu'**un gradient de masse ou de conductivité est mis en place par la dispersion ciblée des composants.

20. Procédé selon la revendication 19, **caractérisé en ce qu'**une couche thermiquement isolante (17) est appliquée lors d'une étape de procédé ultérieure.

21. Système d'échange de chaleur constitué d'éléments d'échange de chaleur selon au moins l'une quelconque des revendications 11 à 18, dans lequel les éléments d'échange de chaleur (11) peuvent être couplés les uns aux autres.

22. Système d'échange de chaleur selon la revendication 21, **caractérisé en ce que** les éléments d'échange de chaleur (11) sont des éléments d'échange de chaleur (11) préfabriqués.

23. Système d'échange de chaleur selon l'une quelconque des revendications 21 ou 22, dans lequel la configuration de conduite de chaque élément d'échange de chaleur (11) comprend au moins deux éléments de raccordement (15, 16), qui peuvent chacun être reliés avec un élément de raccordement (15, 16) d'un autre élément d'échange de chaleur (11) et/ou avec un élément d'alimentation.

24. utilisation d'un système d'échange de chaleur selon l'une quelconque des revendications 21 à 23 pour la fabrication d'un chauffage par panneaux ou par le sol, notamment d'un chauffage par le plancher pouvant être appliqué ultérieurement dans une pièce.
